# EUROPÄISCHE PATENTSCHRIFT

(11) **EP 1 852 337 B1**
(45) Veröffentlichungstag und Bekanntmachung des Hinweises auf die Patenterteilung: **08.04.2009**
(21) Anmeldenummer: 07107308.4
(22) Anmeldetag: 02.05.2007
(51) Int. Cl.: B62D 33/02, B60P 7/12

(54) **Transportaufbau mit Rungen**
Transport superstructure with posts
Construction de transport doté de ranches

(30) Priorität: 03.05.2006 AT 3622006 U
(43) Veröffentlichungstag der Anmeldung: 07.11.2007
(73) Patentinhaber: Ahrenkiel Consulting Services, 3013 Bern (CH)
(72) Erfinder: Ahrenkiel, Christian Jürgen, 3013 Bern (CH)
(74) Vertreter: Müllner, Martin

(56) Entgegenhaltungen:
- CH-A5- 682 065
- DE-A1- 2 318 682
- DE-B- 1 092 317
- FR-A- 1 377 846

## Beschreibung

### Technisches Gebiet

Die Erfindung betrifft einen Transportaufbau mit Rungen, insbesondere einen Holztransportwechselaufbau für Fahrzeuge, wobei die Rungen für das Beladen aus einer Ruhestellung in der Beladeebene um jeweils eine Drehachse hochklappbar und nach dem Entladen in die Beladeebene abklappbar sind.

### Stand der Technik

Beim Verladen von Holzstämmen zum Transport aus dem Wald auf die Straße werden Transportaufbauten eingesetzt, die entweder unmittelbar auf einem Fahrgestell eines Fahrzeuges angeordnet sind oder aber solche, die als separate Baueinheiten nach Beladung vorerst mittels eines Spezialfahrzeuges aus dem Wald gebracht und dann auf einen straßentauglichen LKW umgeladen werden. Die Umladung wie auch das Aufsetzen des Transportaufbaues könnte mit einem Kran geschehen. Im Sinne des AT 7105 U ist es jedoch wesentlich günstiger, ein palettenähnliches Bodenstück als Beladefläche vorzusehen, das mit hydraulisch einzieh- und einklappbaren Standfüßen einerseits und aufklappbaren Rungen anderseits ausgestattet ist. Im zusammengeklappten Zustand können mehrere solcher Transportaufbauten leer zum Einsatzort gebracht werden. Dort werden die Transportaufbauten tischartig aufgestellt und die Rungen hochgeklappt. Nach der Beladung mit den Holzstämmen unterfährt das Spezialfahrzeug den "Tisch", dessen Standfüße eingefahren werden, damit sich der beladene Transportaufbau auf das Spezialfahrzeug absenkt. Sobald die Straße erreicht ist, klappt man die Standfüße herunter und hebt die Ladefläche etwas an, damit das Spezialfahrzeug herausfahren kann. Der straßentaugliche LKW übernimmt den beladenen Transportaufbau, der auf dieses abgesenkt wird.

Aus der gattungsbildenden CH 682 065 A5 sind in die Ladefläche eines Lastwagens ein- und ausklappbare Pfosten bekannt, die zur Sicherung des Ladegutes dienen. Im eingeklappten Zustand ergibt sich eine vollkommen plane Ladefläche. Dazu liegen die Pfosten horizontal in Ausnehmungen der Ladefläche, mit deren Ebene eine Seite der liegenden Pfosten fluchtet. Jeder Pfosten kann um eine horizontale Achse in der Ausnehmung in die Vertikalstellung aus der Ausnehmung heraus hochgeschwenkt werden. Dabei nimmt ein Arm am Pfosten eine auf parallelen Lenkern gelagerte Platte nach oben mit, bis diese in der Ebene der Ladefläche zu liegen kommt und die Öffnung der Ausnehmung ausfüllt. Somit steht auch bei ausgeklappten Pfosten eine vollkommen plane Ladeebene zur Verfügung. Die im Falle der CH 682 065 A5 angesprochenen Pfosten sind mit klappbaren schweren Rungen nicht vergleichbar und daher kann die Handhabung der Pfosten ohne zusätzliche kräftesparende Maßnahmen erfolgen.

Problematisch ist dabei, dass die schweren Rungen nach dem Entladen eingeklappt und im Wald ausgeklappt werden müssen. Dies ist mit erheblichem Arbeitsaufwand verbunden.

### Darstellung der Erfindung

Technische Aufgabe

Es ist Aufgabe der Erfindung, das Einklappen und Ausklappen der Rungen zu erleichtern.

### Technische Lösung

Erfindungsgemäß wird dies dadurch erreicht, dass an den Rungen, insbesondere innerhalb eines U-Profils der Rungen, in Längsrichtung derselben jeweils eine Zugfeder vorgesehen ist, die mit dem zum freien Rungenende weisenden Federende an der Runge fixiert ist und deren anderes Federende über ein Zugseil und mindestens eine an der Runge gelagerte Umlenkrolle an einem ortsfesten Punkt des Transportaufbaues nächst der Runge und oberhalb der Drehachse der Runge verankert ist.

Diese in die Runge geschützt einbaubare Konstruktion ermöglicht einen Gewichtsausgleich und damit eine enorme Entlastung beim Aufstellen oder Umlegen der Rungen aus bzw. in die Beladeebene des Transportaufbaues.

Dieser Vorgang ist jedes Mal erforderlich, wenn Transportaufbauten im nicht benützten Zustand gewissermaßen flachgestellt bzw. auf ein Minimum der Größenausdehnung reduziert werden sollen. Ebenso ist es notwendig, den Gebrauchszustand für das Beladen durch Aufstellen der Rungen aus der horizontalen Ruhelage in die vertikale Gebrauchslage wieder herzustellen. Der Transportaufbau mit den umklappbaren und durch Zugfedern entlasteten Rungen kann auf Fahrzeugen fix angeordnet sein. Der entscheidende Vorteil ergibt sich aber im Zusammenhang mit Holztransportwechselaufbauten, wie sie einleitend auch im Zusammenhang mit der Offenbarung in AT 7105 U beschrieben sind. Diese Wechselaufbauten bilden transportable Container für Baumstämme, die von Spezialfahrzeugen für den Wald auf straßentaugliche Lastkraftwagen umgeladen werden und die leer und aufeinander gestapelt im eingeklappten Zustand der Rungen zurücktransportiert und zur Beladung bereitgehalten werden. Somit ist ein oftmaliges Bewegen der Rungen (mindestens vier Rungen pro Wechselaufbau) erforderlich. Dazu kommt noch, dass das Abklappen oder Aufklappen von Hand auf der Ladefläche stehend durchgeführt werden muss.

Die Erfindung ermöglicht auf Grund der Entlastung durch Federzug ein Manipulieren mit nur geringem Kraftaufwand. Insbesondere ist es zweckmäßig, wenn ein Hebel zur Handbetätigung des Hochstellens oder Umklappens der Rungen nächst der Drehachse der jeweiligen Rungen an den Rungen und etwa radial auskragend angeordnet bzw. einsetzbar ist. Dieser Hebel ermöglicht das Umklappen und Hochstellen der Rungen für das Ladepersonal vom Boden aus, also ohne Aufsteigen auf die Ladefläche des Wechselaufbaues.

Wenn mindestens einer der Fixpunkte der Zugfeder bzw. des Zugseiles an der Runge bzw. an dem Transportaufbau höhenverstellbar ausgebildet ist, dann kann die wirksame aufrichtende Kraft auf die Runge nach Größe und bei Variation des Fixpunktes am Transportaufbau hinauf und hinunter auch nach der Richtung eingestellt werden. Diese Einstellung erfolgt einmal vor Inbetriebnahme. Ein Nachjustieren kann im Laufe der Zeit notwendig werden.

### Kurze Beschreibung der Abbildungen der Zeichnungen

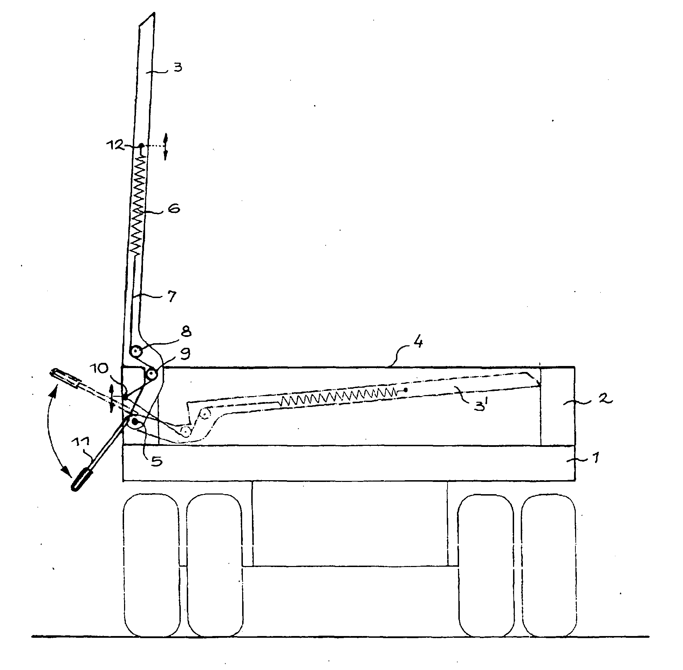

Ein Ausführungsbeispiel für einen erfindungsgemäßen Transportaufbau mit wegklappbaren Rungen ist in der Zeichnung schematisch in Ansicht eines Satteltrailers von hinten dargestellt. Aus Gründen der Übersichtlichkeit ist nur eine einzige Runge in vertikaler Gebrauchsstellung mit vollen Linien und in der horizontalen Ruhestellung strichliert dargestellt.

### Bester Weg zur Ausführung der Erfindung

Ein Satteltrailer 1 trägt einen Transportaufbau 2 mit längsseitig angeordneten Rungen, wobei nur die eine Runge 3 in der Gebrauchsstellung hochgeklappt und als Runge 3' in der Ruhestellung unter die Ladefläche 4 abgeklappt dargestellt ist. Die Drehachse 5 für die Runge 3 ist am Transportaufbau 2 angeordnet. Der Transportaufbau 2 kann mit dem Satteltrailer 1 bzw. dessen Rahmen fest oder lösbar verbunden sein. Im letzteren Fall handelt es sich dann um Transportwechselaufbauten, insbesondere für Holzstämme, die unabhängig vom Fahrzeug beladen und sodann von einem auf ein anderes Fahrzeug in der Art von Containern umgeladen werden. Die Runge 3 ist als U-Profil aus Stahl ausgebildet, das eine Zugfeder 6 einschließt, deren oberes Ende an der Runge 3 fixiert ist. Das andere Ende der Zugfeder 6 ist über ein Zugseil 7 und über Umlenkrollen 8, 9 mit einem ortsfesten Fixpunkt 10 des Transportaufbaues 2 verbunden. Dieser Fixpunkt 10 liegt in einem vorwählbaren Abstand über der Drehachse 5. Dazu kann das Zugseil 7 an verschiedenen übereinander liegenden Einhakpunkten oder an einem höhenverstellbaren Fixpunkt 10 zur Einstellung der aufrichtenden Kraftkomponente eingehängt werden. Die Anordnung ermöglicht die Kompensation des Eigengewichtes der Runge 3, sodass sie mit geringem Kraftaufwand niedergelegt und insbesondere aufgestellt werden kann. Die aufrichtende Kraftkomponente kann als Vektor gesehen werden, der längs des Seilstückes zwischen der Umlenkrolle 9 und dem gewählten Fixpunkt 10 wirkt. Die Richtung dieses Vektors ist durch die Lage des Fixpunktes 10, bezogen auf die Umlenkrolle 9, und die Kraft durch die Spannung der Zugfeder 6 einstellbar. Letztere kann ebenfalls an unterschiedlichen Punkten 12 in Richtung auf das freie Ende der Runge 3 eingehängt, also der obere Einhängpunkt verstellt werden. Die Verstellbarkeit an den beiden Enden, z.B. des Fixpunktes 10, ist jeweils durch Pfeile angedeutet. In der strichliert dargestellten Ruhelage der Runge 3' wurden die Bezugszeichen für die Zugfeder, das Zugseil und die Umlenkrollen bewusst weggelassen, wodurch die Kinematik der Anordnung noch deutlicher zum Ausdruck kommt. Während bisher ein Ladearbeiter auf die Ladefläche 4 steigen musste, um die schweren Rungen 3 aufzurichten oder niederzulegen, kann dies nun vom Boden aus geschehen. Dazu ist ein Hebel 11 nächst der Drehachse 5 an der Runge 3 ansetzbar, über den der Vorgang des Aufstellens oder Umlegens der Runge 3 gefahrlos und ohne Mühe durchgeführt werden kann. Vermerkt sei noch, dass durch diese Anordnung auf eine Arretierung der Gebrauchslage verzichtet werden kann. Es ist natürlich dennoch möglich, eine Arretierung der Runge 3 durch einen Steckbolzen (nicht dargestellt) durchzuführen.

## Patentansprüche

1. Transportaufbau (2) mit Rungen (3, 3'), insbesondere Holztransportwechselaufbau für Fahrzeuge (1), wobei die Rungen (3, 3') für das Beladen aus einer Ruhestellung in der Beladeebene um jeweils eine Drehachse (5) hochklappbar und nach dem Entladen in die Beladeebene abklappbar sind, **dadurch gekennzeichnet, dass** an den Rungen (3, 3'), insbesondere innerhalb eines U-Profils der Rungen (3, 3'), in Längsrichtung derselben jeweils eine Zugfeder (6) vorgesehen ist, die mit dem zum freien Rungenende weisenden Federende an der Runge (3, 3') fixiert ist und deren anderes Federende über ein Zugseil (7) und mindestens eine an der Runge (3, 3') gelagerte Umlenkrolle (8, 9) an einem ortsfesten Punkt (10) des Transportaufbaues (2) nächst der Runge (3, 3') und oberhalb der Drehachse (5) der Runge (3, 3') verankert ist.

2. Transportaufbau nach Anspruch 1, **dadurch gekennzeichnet, dass** ein Hebel (11) zur Handbetätigung des Hochstellens oder Umklappens der Rungen (3, 3') nächst der Drehachse (5) der jeweiligen Rungen (3, 3') an den Rungen (3, 3') und etwa radial auskragend angeordnet bzw. einsetzbar ist.

3. Transportaufbau nach den Ansprüchen 1 oder 2, **dadurch gekennzeichnet, dass** mindestens einer der Fixpunkte (10, 12) der Zugfeder (6) bzw. des Zugseiles (7) an der Runge (3, 3') bzw. an dem Transportaufbau (2) höhenverstellbar ausgebildet ist.

## Claims

1. Transport superstructure (2) with posts (3, 3'), in particular interchangeable wood transport superstructure for vehicles (1), wherein, for loading, the posts (3, 3') can be folded up about a respective rotational axis (5) from a rest position in the loading plane and can be folded down, after unloading, into the loading plane, **characterised in that** provided on the posts (3, 3') in particular within a U-profile of the posts (3, 3'), in the longitudinal direction thereof, is a tension spring (6) in each case, which is fixed to the post (3, 3') by the spring end pointing to the free post end and the other spring end thereof is anchored by means of a traction rope (7) and at least one guide pulley (8, 9) mounted on the post (3, 3') to a stationary point (10) of the transport superstructure (2) next to the post (3, 3') and above the rotational axis (5) of the post (3, 3').

2. Transport superstructure according to claim 1, **characterised in that** a lever (11) for hand actuation of the raising or folding over of the posts (3, 3') is arranged or can be inserted next to the rotational axis (5) of the respective posts (3, 3') on the posts (3, 3') and approximately in a radially projecting manner.

3. Transport superstructure according to claims 1 or 2, **characterised in that** at least one of the fixed points (10, 12) of the tension spring (6) or of the traction rope (7) is configured height adjustably on the post (3, 3') or on the transport superstructure (2).

## Revendications

1. Superstructure de transport (2) à ranchers (3, 3'), en particulier superstructure de transport de bois interchangeable pour véhicules (1), où les ranchers (3, 3') sont basculants vers le haut, depuis une position de repos dans le plan de chargement, autour d'un axe de pivot (5) respectif, en vue du chargement, et rabattables dans le plan de chargement après le déchargement,
**caractérisé en ce que**
sur les ranchers (3, 3') de celle-ci, en particulier à l'intérieur d'un profil en U des ranchers (3, 3'), respectivement un ressort de traction (6) est prévu dans la direction longitudinale des ranchers, ressort dont l'extrémité de ressort dirigée vers l'extrémité libre du rancher est fixée sur le rancher (3, 3'), et dont l'autre extrémité de ressort est ancrée, par l'intermédiaire d'un câble de traction (7) et d'au moins une poulie de renvoi (8, 9) montée sur le rancher (3, 3'), à un point fixe (10) de la superstructure de transport (2) à proximité du rancher (3, 3') et au-dessus de l'axe de pivot (5) du rancher (3, 3').

2. Superstructure de transport selon la revendication 1,
**caractérisée en ce**
**qu'**un levier (11) peut être utilisé pour effectuer le basculement manuel des ranchers (3, 3') vers le haut ou pour les rabattre, en étant disposé sur les ranchers correspondants (3, 3'), à proximité de l'axe de pivot (5) des ranchers (3, 3'), et faisant saillie à peu près radialement.

3. Superstructure de transport selon les revendications 1 ou 2,
**caractérisée en ce que**
l'un au moins des points fixes (10, 12) du ressort de traction (6) ou du câble de traction (7) est aménagé sur le rancher (3, 3') ou sur la superstructure de transport (2) de façon réglable en hauteur.
